# EUROPÄISCHE PATENTSCHRIFT

(11) **EP 1 214 261 B1**
(45) Veröffentlichungstag und Bekanntmachung des Hinweises auf die Patenterteilung: **19.10.2005**
(21) Anmeldenummer: 00963894.1
(22) Anmeldetag: 11.08.2000
(51) Int. Cl.: B65G 13/11, B65G 39/12, B65G 21/20

(54) **FÖRDERBAND UND TRAGPROFIL FÜR EINE FÖRDERBAHN**
CONVEYOR LINE AND SUPPORT PROFILE FOR A CONVEYOR LINE
VOIE DE CONVOYAGE ET SUPPORT PROFILE POUR VOIE DE CONVOYAGE

(30) Priorität: 27.08.1999 DE 19940672
(43) Veröffentlichungstag der Anmeldung: 19.06.2002
(73) Patentinhaber: ROBERT BOSCH GMBH, 70442 Stuttgart (DE)
(72) Erfinder: BUENNING, Torsten, 70469 Stuttgart (DE); KUEPFERLE, Harald, 74385 Pleidelsheim (DE); KLEMD, Olaf, 71706 Markgroeningen (DE); BREITENBUECHER, Armin, 73655 Pluederhausen (DE)
(86) Internationale Anmeldenummer: PCT/DE2000/002700
(87) Internationale Veröffentlichungsnummer: WO 2001/016001

(56) Entgegenhaltungen:
- EP-A- 0 385 849
- WO-A-99/02435
- DE-A- 19 532 390
- DE-U- 9 316 922
- US-A- 5 372 247
- US-A- 5 657 854

## Beschreibung

### Stand der Technik

Die Erfindung betrifft eine Förderbahn mit im wesentlichen zwei parallel zueinander angeordneten Tragprofilen, zwischen denen Rollen zum Transport von Teilen wie Werkstücke oder Werkstückträger angeordnet sind.

Eine derartige Förderbahn ist aus der US-Patentschrift 5 372 247 bekannt. Die dort gezeigte Förderbahn weist ein Tragprofil auf, auf dessen einen Längsseite ein Führungsprofil befestigt ist. An einer angrenzenden zweiten Längsseite ist eine hinterschnittene Längsnut zur Aufnahme eines, Lagerstellen zur Lagerung von Rollen aufweisenden Stabs angeordnet.

Eine Förderbahn und ein Tragprofil für eine Förderbahn sind weiterhin beispielsweise aus der DE 35 18 134 A1 bekannt. Die Förderbahn hat zwei im wesentlichen parallele Tragprofile. Jedes Tragprofil weist eine Längsseite auf, an der ein Führungsprofil befestigbar ist. Die Förderbahn und das Tragprofil mit dem Führungsprofil sind auf den Einsatz für Doppelgurtförderer beschränkt.

Ferner ist auf den Seiten 8-12 bis 8-15 des Katalogs "Manuelle Arbeitssysteme", Ausgabe 7.0 (1988) der Robert Bosch GmbH, Stuttgart, DE, beschrieben, an Tragprofilen Rollen mittels angeschraubten Rollenhaltern zu befestigen. Für jede Rolle muß ein Rollenhalter vorgesehen werden. Der Montageaufwand ist recht groß, da jeder Rollenhalter einzeln mit einer Hammermutter bzw. einem Nutenstein und einer Schraube montiert werden muß. Außerdem wird die Montage auch dadurch erschwert, daß zwei, eine Rolle lagernde Rollenhalter recht genau zueinander ausgerichtet werden müssen, da ansonsten die Rolle schwer laufen oder gar klemmen kann.

### Vorteile der Erfindung

Die erfindungsgemäße Förderbahn und das erfindungsgemäße Tragprofil für eine Förderbahn mit den kennzeichnenden Merkmalen der unabhängigen Ansprüche haben demgegenüber den Vorteil, daß sie auf einfache Weise für sogenannte Rollenstrecken verwendbar sind, da die Montage zu einer solchen Rollenstrecke ohne Werkzeuge erfolgen kann. Sie können auch als Gleitstrecken für manuelle Verschiebestrecken und außerdem für Doppelgurtförderer verwendet werden.

Es ist besonders günstig, einen Stab zur Lagerung der Rollen in einer Aufnahme am Tragprofil anzuordnen und mittels eines am Tragprofil rastbar befestigbaren Führungsprofils zu fixieren.

Ist auf dem Führungsprofil eine Gleitfläche für darauf zu fördernde Werkstückträger oder Werkstücke ausgebildet, so läßt sich die Förderbahn gut als manuelle Verschiebestrecke verwenden.

Es ist zweckmäßig, wenn in Längsrichtung des Stabs mehrere Lagerstellen für Rollenelemente vorgesehen sind. Hierfür können in gleichmäßigen Abständen Ausnehmungen ausgebildet sein, in denen die Rollen gelagert werden können. Dadurch haben die Rollen auf einfache Weise einen gleichmäßigen Abstand zueinander.

Ist an einem Ende des Stabs ein verrundeter Fortsatz und am anderen Ende des Stabs eine verrundete Einformung so ausgebildet, daß der Fortsatz eines ersten Stabs in der Einformung eines zweiten Stabs anordenbar ist, so lassen sich mehrere Stäbe formschlüssig in Längsrichtung gesichert hintereinander anordnen.

Weitere Vorteile und vorteilhafte Weiterbildungen der erfindungsgemäßen Förderbahn und des erfindungsgemäßen Tragprofils für eine Förderbahn ergeben sich aus den Unteransprüchen und der Beschreibung.

### Zeichnung

Ein Ausführungsbeispiel der Erfindung ist in der Zeichnung dargestellt und in der nachfolgenden Beschreibung näher erläutert. Es zeigen
- Figur 1: eine Stirnansicht einer Förderbahn,
- Figur 2: eine Ansicht eines Stabs zur Lagerung von Rollen und
- Figur 3: eine Draufsicht des Stabs nach Figur 2.

### Beschreibung des Ausführungsbeispiels

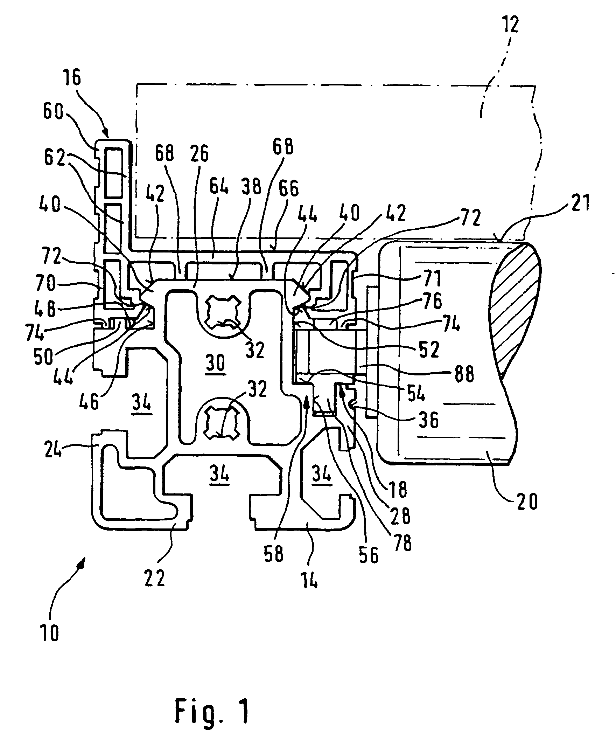

In der Figur 1 ist ausschnittsweise die Stirnansicht einer Förderbahn 10 gezeigt. Die Förderbahn 10 dient dem Fördern von mit dem Bezugszeichen 12 gekennzeichneten Werkstückträgern oder Werkstücken. Die Förderbahn 10 weist zwei im wesentlichen parallel zueinander angeordnete Tragprofile 14 auf, wobei an jedem Tragprofil 14 ein Führungsprofil 16 und vorzugsweise ein oder mehrere Stäbe 18 zur Lagerung von Rollen 20 angeordnet sind. Die Rollen 20 sind hierbei in Längsrichtung der Transportbahn 10 hintereinander angeordnet. Die Linien der Außenumfänge der Rollen 20, auf denen die Werkstückträger 12 oder Werkstücke aufliegen, bilden die Transportebene 21 der Förderbahn 10.

Das Tragprofil 14 ist im Aluminium-Strangpreßverfahren hergestellt; es weist im wesentlichen vier Längsseiten 22, 24,26, 28 und einen in Längsrichtung verlaufenden Hohlraum 30 auf. Im Hohlraum 30 sind zwei Schraubkanäle 32 ausgebildet. Durch die Schraubkanäle 32 können die Stirnseiten des Tragprofils 14 mit nicht dargestellten Platten verschlossen werden. Dadurch kann der Hohlraum 30 als Preßluftleitung verwendet werden. Die Längsseite 22 stellt, wenn die Förderbahn 10 horizontal bzw. waagrecht aufgestellt ist, die Unterseite des Tragprofils 14 dar. Die Längsseite 24 stellt in diesem Fall die Außenseite des Tragprofils 14 dar. Außenseite heißt in diesem Fall, daß die Längsseite 24 seitlich außen an der Förderbahn 10 verläuft. Sowohl in der Längsseite 22 als auch in der Längsseite 24 ist jeweils eine Montagenut 34 mit einem Hinterschnitt ausgebildet. Dadurch lassen sich auf einfache Weise weitere Bauteile an die Förderbahn 10 montieren.

An der Längsseite 26, die bei horizontaler bzw. waagerechter Aufstellung der Förderbahn 10 die Oberseite des Tragprofils 14 darstellt, ist das Führungsprofil 16 befestigbar. Schließlich sind entlang der Längsseite 28, die an die Längsseite 26 angrenzt und somit bei horizontaler Aufstellung der Förderbahn 10 an der Innenseite der Förderbahn 10 verläuft, ein oder mehrere Stäbe 18 zur Lagerung der Rollen 20 anordenbar. Entlang des zwischen dem Stab 18 und der Längsseite 22 verlaufenden Bereichs der Längsseite 28 sind ferner noch eine als Anbohrhilfe dienende Vertiefung 36 und eine weitere Montagenut 34 ausgebildet.

Das Führungsprofil 16, das zum Beispiel als extrudiertes Kunststoffteil ausgebildet sein kann, ist rastbar am Tragprofil 14 befestigbar. Hierzu ist an der für das Führungsprofil 16 vorgesehenen Längsseite 26 des Tragprofils 14 eine Auflagefläche 38 ausgebildet. An die Auflagefläche 38 schließen sich Rastabschnitte 40 für das Führungsprofil 14 an. Hierbei weisen die Rastabschnitte 40 erste, von der Auflagefläche 38 weggerichtete, abfallende Flächenabschnitte 42 auf, an die sich zur Mitte des Tragprofils 14 gerichtete Flächenabschnitte 44 anschließen. Dadurch bilden die Flächenabschnitte 42, 44 zwei voneinander wegweisende Zacken als Rastabschnitte 40 für das Führungsprofil 16.

An den der Längsseite 24 zugewandten Flächenabschnitt 44 schließt sich ein senkrecht zur Transportebene 21 verlaufender Flächenabschnitt 46 an. An den senkrecht verlaufenden Flächenabschnitt 46 schließt sich ein waagerecht verlaufender Flächenabschnitt 48 an, der in die Längsseite 24 übergeht. Auf dem Flächenabschnitt 48 ist ferner noch ein Steg 50 vorgesehen.

An den der Längsseite 28 zugewandten Rastabschnitt 40 schließt sich an den Flächenabschnitt 44 ein Flächenabschnitt 52, der im wesentlichen senkrecht zur Transportebene 21 verläuft, an. An den Flächenabschnitt 52 schließt sich ein vorzugsweise im wesentlichen parallel zur Transportebene 21 der Förderbahn 10 verlaufender Abschnitt 54 an. In dem Abschnitt 54 verläuft eine Nut 56. Der Bereich des Flächenabschnitts 52 und des Abschnitts 54 stellt eine Aufnahme 58 für den Stab 18 dar.

Das Führungsprofil 16 hat im wesentlichen eine L-förmige Querschnittsfläche. Hierbei verläuft ein erster Schenkel 60 des Führungsprofils 16 senkrecht zur Transportebene 21 und bildet eine seitliche Führung für Werkstücke oder Werkstückträger 12 dar. Der erste L-Schenkel 60 schließt außen an der Förderbahn 10 in etwa bündig mit der Längsseite 24 ab. Zur Gewichtseinsparung sind im ersten L-Schenkel 60 Hohlkammern 62 ausgebildet.

Die von der Auflagefläche 38 abgewandten Außenseite des - in der Figur 1 waagerecht verlaufenden - zweiten L-Schenkels 64 des Führungsprofils 16 ist als Gleitfläche 66 für darauf zu fördernde Werkstücke oder Werkstückträger 12 ausgebildet. Die Gleitfläche 66 liegt vorzugsweise etwas unterhalb der von den Rollen 20 gebildeten Transportebene 21, so daß Werkstücke oder Werkstückträger 12 bei der Verwendung von Rollen 20 keiner zusätzlichen Reibung ausgesetzt sind. Der zweite L-Schenkel 64 weist zwei parallel zueinander verlaufenden Stege 68 auf, mit denen er auf der Auflagefläche 38 aufliegt. Weiterhin weist das Führungsprofil 16 an den Enden der von der Gleitfläche 68 abgewandten Seite des zweiten horizontalen L-Schenkels 64 zwei Abschnitte 70, 71 mit einander zugewandten hakenförmigen Fortsätzen 72 auf. Die hakenförmigen Fortsätze 72 der Abschnitte 70, 71 umgreifen die Rastabschnitte 40, wobei die hakenförmigen Fortsätze 72 an den Flächenabschnitten 44 des Tragprofils 14 anliegen. Der Abschnitt 70, der im Bereich der Längsseite 24 liegt und mit dem ersten, senkrecht verlaufenden L-Schenkel 62 fluchtet, liegt einerseits auf dem Steg 50 auf und andererseits mit dem Fortsatz 74 auf dem Bereich des Flächenabschnitts 48, der zwischen dem Steg 50 und der Längsseite 24 verläuft. Dadurch ist eine recht stabile Befestigung des Führungsprofils 16 an dem Tragprofil 14 gewährleistet.

Der Abschnitt 71 umgreift mit einem Fortsatz 74 den Stab 18. Dieser hat hierzu vorzugsweise einen Fortsatz 76, der im wesentlichen senkrecht zur Transportebene 21 der Förderbahn 10 verläuft. Der Stab 18, der in der Aufnahme 58 angeordnet ist, weist einen zusätzlichen Fortsatz 78 auf, der dem vom Führungsprofil 16 umgriffenen Fortsatz 76 diametral gegenüberliegt und in der Nut 56 des Abschnitts 54 angeordnet ist. Im zusammengebauten Zustand der Förderbahn 10 bilden das Führungsprofil 16 mit seinem Abschnitt 71 sowie dessen Fortsatz 74 und die Aufnahme 58 des Tragprofils 14 eine hinterschnittene Nut, in der der Stab 18 sicher befestigbar ist.

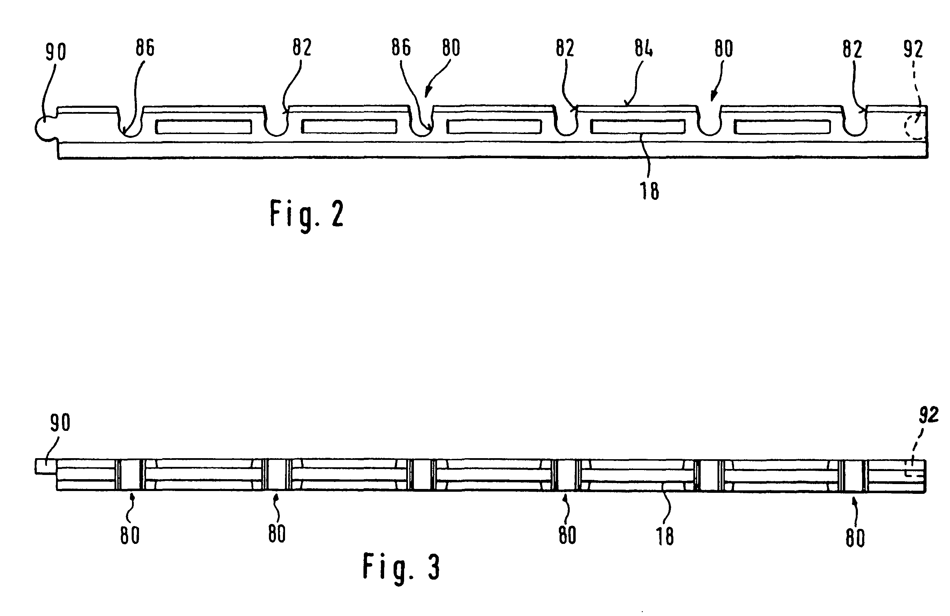

Der Stab 18 ist beispielsweise als Kunststoffspritzgußteil herstellbar. Wie aus den Figuren 2 und 3 hervorgeht sind in Längsrichtung des Stabs 18 mehrere Lagerstellen 80 für Rollen 20 vorgesehen. Hierfür sind im Stab 18 in gleichmäßigen Abständen vorzugsweise Ausnehmungen 82 ausgebildet, die von einer Seite 84 des Stabs 18, die in montiertem Zustand der Transportebene 21 zugewandt ist, ausgehen. Die Ausnehmungen 82 verlaufen keilförmig und münden in kreissegmentförmige Einformungen 86, die vorzugsweise einen Winkel von mehr als 180° einschließen. Die Einformungen 86 haben einen Durchmesser, der dem der Zapfen 88 an den Stirnseiten der Rollen 20 (Figur 1) entspricht. Die Ausnehmungen 82 haben am Übergang zu den kreissegmentförmigen Einformungen 86 einen Abstand, der kleiner ist als der Durchmesser der Zapfen 88. Dadurch sind die Rollen 20 mit ihren Zapfen 88 in radialer Richtung, nachdem sie in die Einformungen 86 eingesetzt wurden, etwas gesichert. Die Lagerstellen 80 können jedoch auch einfacher aufgebaut sein. Beispielsweise können die Ausnehmungen 82 und die Einformungen 86 als rechteckförmige Ausschnitte im Stab 18 ausgebildet sein.

An einem Ende des Stabs 18 ist ein verrundeter Fortsatz 90 und am anderen Ende des Stabs 18 eine verrundete Einformung 92 ausgebildet. Die Breite des Fortsatzes 90 und der Einformung 92 erstreckt sich nur über die halbe Breite des Stabs 18. Dadurch ist der Fortsatz 90 eines ersten Stabs 18 in der Einformung 92 eines zweiten Stabs 18 anordenbar.

Zur Montage der Förderbahn 10 werden zunächst zwei Tragprofile 14 auf das erforderliche Maß abgelängt und an einem nicht dargestellten Gestell montiert. Als nächstes werden Stäbe 18 über ihre Fortsätze 90 und Einformungen 92 zusammengefügt und in der Aufnahme 58 angeordnet. Danach wird die erforderliche Anzahl an Rollen in den Lagerstellen 80 der Stäbe 18 angeordnet. Schließlich wird auf jedem Tragprofil 14 ein Führungsprofil 16 aufgerastet. Hierbei werden die Abschnitte 70 des Führungsprofils 16 zunächst durch die Flächenabschnitte 42 aufgeweitet. Schließlich liegen die Stäbe 68 des L-Schenkels 64 auf der Auflagefläche 38 auf und die hakenförmigen Fortsätze 72 hintergreifen die Rastabschnitte 40 und liegen an den Flächenabschnitten 44 an. Dadurch sind außerdem die Stäbe 18 durch das Führungsprofil 16 am Tragprofil 14 fixiert. Somit können auf einfache Weise Förderbahnen 10 zu sogenannten Stauförderern oder Rollenstrecken aufgebaut werden.

Durch Weglassen der Rollen 20 und gegebenenfalls der Stäbe 18 kann eine Förderbahn 10 als sogenannte manuelle Schiebestrecke aufgebaut sein. Hierbei gleiten Werkstücke oder Werkstückträger 12 über die Gleitflächen 68 der Führungsprofile 16. Andererseits können über die Gleitflächen 68 auch Gurte von Doppelgurtförderern laufen. Die Förderbahn 10 ist auf einfache Weise für verschiedene Verwendungszwecke einfach einsetzbar.

Statt der beschriebenen Rastbefestigung des Führungsprofils 16 an dem Tragprofil 14, bei dem das Führungsprofil 16 nach außen gerichtete Rastabschnitte 40 umgreift, kann eine Rastbefestigung auch alternativ so wie in der eingangs genannten DE 35 18 134 A1 beschrieben ausgebildet sein, wobei Rastabschnitte des Tragprofils Fortsätze des Führungsprofils umgreifen. Außer einer Rastbefestigung kann das Führungsprofil alternativ auch aufgeklebt oder aufgeschraubt werden, wobei eine Rastbefestigung jedoch die einfachste Befestigungs- und Demontagemöglichkeit bietet.

## Patentansprüche

1. Förderbahn (10) mit zwei im wesentlichen parallelen Tragprofilen (14), wobei jedes Tragprofil (14) eine Längsseite (26) aufweist, an der ein Führungsprofil (16) befestigbar ist, **dadurch gekennzeichnet, daß** entlang einer an die Längsseite (26) für das Führungsprofil (16) angrenzenden Längsseite (28) des Tragprofils (14) eine Aufnahme (58) für mindestens einen Lagerstellen (82) zur Lagerung von Rollen (20) aufweisenden Stab (18) ausgebildet ist und daß die Aufnahme (58) des Tragprofils (14) und das Führungsprofil (16) mit einem Abschnitt (71) sowie einem daran ausgebildeten Fortsatz (74) eine hinterschnittene Nut bilden, in der der mindestens eine Stab (18) befestigbar ist.

2. Förderbahn (10) nach Anspruch 1, **dadurch gekennzeichnet, daß** mindestens ein Stab (18) mit Lagerstellen (82) zur Lagerung von Rollen (20) vorgesehen ist und daß das Führungsprofil (16) den mindestens einen Stab (18) mit dem Fortsatz (74) umgreift.

3. Förderbahn (10) nach Anspruch 1 oder 2, **dadurch gekennzeichnet, daß** der Fortsatz (74) des Führungsprofils (16) einen Fortsatz (76) des mindestens einen Stabs (18), der senkrecht zur Transportebene (21) der Förderbahn (10) verläuft, umgreift.

4. Förderbahn (10) nach einem der Ansprüche 1 bis 3, **dadurch gekennzeichnet, daß** das Führungsprofil (16) rastbar am Tragprofil (14) befestigbar ist.

5. Förderbahn (10) nach einem der Ansprüche 1 bis 4, **dadurch gekennzeichnet, daß** an der für das Führungsprofil (16) vorgesehenen Längsseite (26) des Tragprofils (14) eine Auflagefläche (38) für das Führungsprofil (16) ausgebildet ist und daß sich an die Auflagefläche (38) Rastabschnitte (40) für das Führungsprofil (16) anschließen.

6. Förderbahn (10) nach Anspruch 5, **dadurch gekennzeichnet, daß** die Rastabschnitte (40) erste, von der Auflagefläche (38) weggerichtete, abfallende Flächenabschnitte (42) aufweisen, an die sich zur Mitte des Tragprofils (14) gerichtete Flächenabschnitte (44) anschließen, so daß die Flächenabschnitte (42, 44) zwei voneinander wegweisende Zacken als Rastabschnitt (40) bilden, und daß das Führungsprofil (16) zwei Abschnitte (70) mit einander zugewandten hakenförmigen Fortsätzen (72) aufweist, die die Rastabschnitte (40) umgreifen.

7. Förderbahn (10) nach einem der Ansprüche 1 bis 6, **dadurch gekennzeichnet, daß** auf dem Führungsprofil (16) eine Gleitfläche (66) für darauf zu fördernde Werkstücke oder Werkstückträger (12) ausgebildet ist, die unterhalb einer von Rollen (20) gebildeten Transportebene (21) liegt.

8. Förderbahn (10) nach einem der Ansprüche 1 bis 7, **dadurch gekennzeichnet, daß** der mindestens eine Stab (18) an einem Abschnitt (54) der Aufnahme (58), der parallel zur Transportebene (21) der Förderbahn (10) verläuft, aufliegt.

9. Förderbahn (10) nach einem der Ansprüche 1 bis 8, **dadurch gekennzeichnet, daß** der mindestens eine Stab (18) einen zusätzlichen Fortsatz (78) aufweist, der dem vom Führungsprofil (16) umgriffenen Fortsatz (76) diametral gegenüberliegt, und daß in dem Abschnitt (54) eine Nut (56) zur Aufnahme des zusätzlichen Fortsatzes (78) ausgebildet ist.

10. Förderbahn (10) nach einem der Ansprüche 1 bis 9, **dadurch gekennzeichnet, daß** in Längsrichtung des mindestens einen Stabs (18) mehrere Lagerstellen (80) für Rollen (20) vorgesehen sind.

11. Förderbahn (10) nach einem der Ansprüche 1 bis 10, **dadurch gekennzeichnet, daß** in dem mindestens einen Stab (18) in gleichmäßigen Abständen Ausnehmungen (82) ausgebildet sind, die von einer Seite (84) des Stabs (18) ausgehen und in als Lagerstellen (80) dienende kreissegmentförmige Einformungen (86) münden, die vorzugsweise einen Winkel von mehr als 180° einschließen.

12. Förderbahn (10) nach einem der Ansprüche 1 bis 11, **dadurch gekennzeichnet, daß** an einem Ende des mindestens einen Stabs (18) ein verrundeter Fortsatz (90) und am anderen Ende des mindestens einen Stabs (18) eine verrundete Einformung (92) ausgebildet ist, und daß der Fortsatz (90) eines ersten Stabs (18) in der Einformung (92) eines zweiten Stabs (18) anordenbar ist.

13. Tragprofil (14) für eine Förderbahn (10) mit einem daran angebrachten Führungsprofil (16), wobei das Tragprofil (14) eine Längsseite (26) aufweist, an der das Führungsprofil (16) befestigbar ist, **dadurch gekennzeichnet, daß** entlang einer, an die Längsseite (26) für das Führungsprofil (16) angrenzenden Längsseite (28) des Tragprofils (14) eine Aufnahme (58) für mindestens einen, Lagerstellen (82) zur Lagerung von Rollen (20) aufweisenden Stab (18) ausgebildet ist und daß die Aufnahme (58) des Tragprofils (14) und das Führungsprofil (16) mit einem Abschnitt (71) sowie einem daran ausgebildeten Fortsatz (74) eine hinterschnittene Nut bilden, in der der mindestens eine Stab (18) befestigbar ist, daß weiterhin an der für das Führungsprofil (16) vorgesehenen Längsseite (26) des Tragprofils (14) eine Auflagefläche (38) für das Führungsprofil (16) ausgebildet ist und daß sich an die Auflagefläche (38) Rastabschnitte für das Führungsprofil (16) anschließen.

14. Tragprofil (14) nach Anspruch 13, **dadurch gekennzeichnet, daß** das Führungsprofil (16) rastbar am Tragprofil (14) befestigbar ist.

15. Tragprofil (14) nach Anspruch 13, **dadurch gekennzeichnet, daß** die Rastabschnitte (40) erste, von der Auflagefläche weggerichtete, abfallende Flächenabschnitte (42) aufweisen, an die sich zur Mitte des Tragprofils (14) gerichtete Flächenabschnitte (44) anschließen, so daß die Flächenabschnitte zwei voneinander wegweisende Zacken als Rastabschnitte (40) für das Führungsprofil (16) bilden.

16. Tragprofil (14) nach einem der Ansprüche 13 bis 15, **dadurch gekennzeichnet, daß** an der Aufnahme (58) ein Abschnitt (54) zur Auflage für den mindestens einen Stab (18) vorgesehen ist, wobei der Abschnitt (54) vorzugsweise im wesentlichen parallel zur Transportebene (21) der Förderbahn (10) verläuft.

17. Tragprofil (14) nach Anspruch 16, **dadurch gekennzeichnet, daß** in dem Abschnitt (54) eine Nut (56) zur Aufnahme eines Fortsatzes (78) an mindestens einem Stab (18) ausgebildet ist.

## Claims

1. Conveyor line (10) comprising two substantially parallel support profiles (14), each support profile (14) having a longitudinal side (26) to which a guide profile (16) can be fastened, **characterized in that** a seat (58) for at least one rail (18) having bearing points (82) for the mounting of rollers (20) is formed along a longitudinal side (28) of the support profile (14) which adjoins the longitudinal side (26) for the guide profile (16), and **in that** the seat (58) of the support profile (14) and the guide profile (16), by way of a section (71) and of a projection (74) formed thereon, form an undercut groove in which the at least one rail (18) can be fastened.

2. Conveyor line (10) according to Claim 1, **characterized in that** at least one rail (18) having bearing points (82) for the mounting of rollers (20) is provided, and **in that** the guide profile (16) engages around the at least one rail (18) by way of the projection (74).

3. Conveyor line (10) according to Claim 1 or 2, **characterized in that** the projection (74) of the guide profile (16) engages around a projection (76) of the at least one rail (18), which runs perpendicularly to the transporting plane (21) of the conveyor line (10).

4. Conveyor line (10) according to one of Claims 1 to 3, **characterized in that** the guide profile (16) can be snap-fastened to the support profile (14).

5. Conveyor line (10) according to one of Claims 1 to 4, **characterized in that** a bearing surface (38) for the guide profile (16) is formed on the longitudinal side (26) of the support profile (14) provided for the guide profile (16), and **in that** latching sections (40) for the guide profile (16) adjoin the bearing surface (38).

6. Conveyor line (10) according to Claim 5, **characterized in that** the latching sections (40) have first, sloping planar sections (42) directed away from the bearing surface (38), which are adjoined by planar sections (44) directed towards the centre of the support profile (14), with the result that the planar sections (42, 44) form two teeth facing away from one another as the latching sections (40), and **in that** the guide profile (16) has two sections (70, 71) with mutually facing hook-shaped projections (72) which engage around the latching sections (40).

7. Conveyor line (10) according to one of Claims 1 to 6, **characterized in that** a sliding surface (66) for workpieces or workpiece carriers (12) to be conveyed on the guide profile (16) is formed on the latter and is situated below a transporting plane (21) formed by rollers (20).

8. Conveyor line (10) according to one of Claims 1 to 7, **characterized in that** the at least one rail (18) bears on a section (54) of the seat (58) which runs parallel to the transporting plane (21) of the conveyor line (10).

9. Conveyor line (10) according to one of Claims 1 to 8, **characterized in that** the at least one rail (18) has an additional projection (78) which is situated diametrically opposite the projection (76) around which the guide profile (16) engages, and **in that** a groove (56) for locating the additional projection (78) is formed in the section (54).

10. Conveyor line (10) according to one of Claims 1 to 9, **characterized in that** a plurality of bearing points (80) for rollers (20) are provided in the longitudinal direction of the at least one rail (18).

11. Conveyor line (10) according to one of Claims 1 to 10, **characterized in that** cutouts (82) are formed at regular intervals in the at least one rail (18), these cutouts starting from one side (84) of the rail (18) and opening into circular segment-shaped slots (86) acting as bearing points (80), these slots preferably enclosing an angle of more than 180°.

12. Conveyor line (10) according to one of Claims 1 to 11, **characterized in that** a rounded projection (90) is formed at one end of the at least one rail (18) and a rounded slot (92) is formed at the other end of the at least one rail (18), and **in that** the projection (90) of a first rail (18) can be arranged in the slot (92) of a second rail (18).

13. Support profile (14) for a conveyor line (10), comprising a guide profile (16) fitted thereto, the support profile (14) having a longitudinal side (26) to which the guide profile (16) can be fastened, **characterized in that** a seat (58) for at least one rail (18) having bearing points (82) for the mounting of rollers (20) is formed along a longitudinal side (28) of the support profile (14) which adjoins the longitudinal side (26) for the guide profile (16), and **in that** the seat (58) of the support profile (14) and the guide profile (16), by way of a section (71) and of a projection (74) formed thereon, form an undercut groove in which the at least one rail (18) can be fastened, **in that**, furthermore, a bearing surface (38) for the guide profile (16) is formed on the longitudinal side (26) of the support profile (14) which is provided for the guide profile (16), and **in that** the bearing surface (38) is adjoined by latching sections for the guide profile (16).

14. Support profile (14) according to Claim 13, **characterized in that** the guide profile (16) can be snap-fastened to the support profile (14).

15. Support profile (14) according to Claim 13, **characterized in that** the latching sections (40) have first, sloping planar sections (42) directed away from the bearing surface, which are adjoined by planar sections (44) directed towards the centre of the support profile (14), with the result that the planar sections form two teeth facing away from one another as the latching sections (40) for the guide profile (16).

16. Support profile (14) according to one of Claims 13 to 15, **characterized in that** a section (54) for supporting the at least one rail (18) is provided on the seat (58), the section (54) preferably running substantially parallel to the transporting plane (21) of the conveyor line (10).

17. Support profile (14) according to Claim 16, **characterized in that** a groove (56) for locating a projection (78) on at least one rail (18) is formed in the section (54).

## Revendications

1. Voie de convoyage (10) comportant deux supports profilés (14) essentiellement parallèles, chaque support profilé (14) ayant un côté longitudinal (26) auquel se fixe un profilé de guidage (16),
**caractérisé en ce que**
le long d'un grand côté (28) du support profilé (14) adjacent au grand côté (26) du profilé de guidage (16), un logement (58) pour au moins un palier (82) est réalisé pour recevoir une barre (18) munie de galets (20), et
le logement (58) du support profilé (14) et du profilé de guidage (16) forment avec un segment (71) et un prolongement (74) réalisé sur celui-ci, une rainure à contre-dépouille dans laquelle se fixe au moins une barre (18).

2. Voie de convoyage (10) selon la revendication 1,
**caractérisée par**
au moins une barre (18) avec des points de palier (82) pour recevoir des galets (20), et
le profilé de guidage (16) entoure au moins une barre (18) avec un prolongement (74).

3. Voie de convoyage (10) selon la revendication 1 ou 2,
**caractérisée en ce que**
le prolongement (74) du profilé de guidage (16) entoure un prolongement (76) d'au moins une barre (18) dirigée perpendiculairement au plan de transport (21) de la voie de convoyage (10).

4. Voie de convoyage (10) selon l'une des revendications 1 à 3,
**caractérisée en ce que**
le profilé de guidage (16) peut se fixer en s'accrochant au support profilé (14).

5. Voie de convoyage (10) selon l'une des revendications 1 à 4,
**caractérisée en ce que**
sur un grand côté (26) du support profilé (14) prévu pour le profilé de guidage (16) il y a une surface d'appui (38) pour le profilé de guidage (16) et
des segments d'accrochage (40) pour le profilé de guidage (16) sont prévus sur la surface d'appui (38).

6. Voie de convoyage (10) selon la revendication 5,
**caractérisée en ce que**
les segments d'accrochage (40) comportent des premiers segments de surface (42) descendant, s'écartant de la surface d'appui (38), ces premiers segments étant suivis par des segments de surface (44) dirigés vers le milieu du support profilé (14) pour que les segments de surface (42, 44) forment deux dents s'écartant l'une de l'autre comme segments d'accrochage (40), et
le profilé de guidage (16) comporte deux segments (70) avec des prolongements (72) en forme de crochets tournés l'un vers l'autre et qui entourent les segments d'accrochage (40).

7. Voie de convoyage (10) selon l'une des revendications 1 à 6,
**caractérisée en ce qu'**
une surface de glissement (66) pour les pièces à transférer ou les supports de pièces (12) est réalisée sur le profilé de guidage (16), et cette surface est située en dessous d'un plan de transport (21) formé par des galets (20).

8. Voie de convoyage (10) selon l'une des revendications 1 à 7,
**caractérisée en ce qu'**
au moins une barre (18) s'appuie contre un segment (54) du logement (56), cette barre étant parallèle au plan de transport (21) de la bande transporteuse (10).

9. Voie de convoyage (10) selon l'une des revendications 1 à 8,
**caractérisée en ce qu'**
au moins une barre (18) a un prolongement supplémentaire (78) directement en regard du prolongement (76) entouré par le profilé de guidage (16), et
une rainure (56) est prévue dans le segment (54) pour recevoir le prolongement supplémentaire (78).

10. Voie de convoyage (10) selon l'une des revendications 1 à 9,
**caractérisée en ce qu'**
au moins une barre (18) comporte dans sa direction longitudinale, plusieurs points de palier (80) pour des galets (20).

11. Voie de convoyage (10) selon l'une des revendications 1 à 10,
**caractérisée en ce que**
des cavités (82) prévues à intervalles réguliers dans au moins une barre (18), partent d'un côté (84) de la barre (18) et débouchent dans des déformations (86) en forme de segments de cercle servant de points de palier (80), ces déformations englobant de préférence un angle supérieur à 180°.

12. Voie de convoyage (10) selon l'une des revendications 1 à 11,
**caractérisée en ce qu'**
une extrémité d'au moins une barre (18) comporte un prolongement arrondi (90) et l'autre extrémité de cette barre (18) a une cavité arrondie (92), et
le prolongement (90) de la première barre (18) s'installe dans la cavité (92) de la seconde barre (18).

13. Support profilé (14) pour une voie de convoyage (10) comportant un profilé de guidage (16) fixé au support,
le support profilé (14) ayant un grand côté (26) auquel se fixe le profilé de guidage (16),
**caractérisé en ce que**
le long d'un grand côté (28) du support profilé (14) adjacent au grand côté (26) du profilé de guidage (16) il y a un logement (58) pour au moins une barre (18) ayant des points de palier (82) pour recevoir des galets (20), et
le logement (58) du support profilé (14) et le profilé de guidage (16) forment avec un segment (71) et un prolongement (74) réalisé sur celui-ci, une rainure en contre-dépouille dans laquelle se fixe au moins une barre (18),
et en outre le grand côté (26) du support profilé (14) prévu pour le profilé de guidage (16) a une surface d'appui (38) pour le profilé de guidage (16), et
des segments d'encliquetage pour le profilé de guidage (16) font suite à la surface d'appui (38).

14. Support profilé (14) selon la revendication 13,
**caractérisé en ce que**
le profilé de guidage (16) se fixe par encliquetage au support profilé (14).

15. Support profilé (14) selon la revendication 13,
**caractérisé en ce que**
les segments d'accrochage (40) ont des premiers segments de surface descendants (42) s'écartant de la surface d'appui et suivis par des segments de surface (44) dirigés par le milieu du profilé de support (14) pour que les segments de surface forment deux dents s'écartant l'une de l'autre comme segments d'accrochage (40) pour le profilé de guidage (16).

16. Support profilé (14) selon l'une des revendications 13 à 15,
**caractérisé en ce que**
le logement (58) comporte un segment (54) pour recevoir au moins une barre (18), le segment (54) étant de préférence essentiellement parallèle au plan de transport (21) de la voie de convoyage (10).

17. Support profilé (14) selon la revendication 16,
**caractérisé en ce que**
le segment (54) comporte une rainure (56) pour recevoir un prolongement (78) d'au moins une barre (18).
